# EUROPEAN PATENT APPLICATION

(11) **EP 4 082 968 A1**
(43) Date of publication of application: **02.11.2022**
(21) Application number: 20905158.0
(22) Date of filing: 15.10.2020
(51) Int. Cl.: C01B 33/18, H01M 4/36, H01M 4/38, H01M 4/48

(54) **NEGATIVE ELECTRODE ACTIVE MATERIAL FOR SECONDARY BATTERIES, AND SECONDARY BATTERY**

(30) Priority: 26.12.2019 JP 2019237441
(71) Applicant: Panasonic Intellectual Property Management Co., Ltd., Osaka-shi, Osaka 540-6207 (JP)
(72) Inventor: UCHIYAMA Yohei, Osaka-shi, Osaka 540-6207 (JP); SATO Yosuke, Osaka-shi, Osaka 540-6207 (JP); ASANO Taisuke, Osaka-shi, Osaka 540-6207 (JP); OKAZAKI Keita, Osaka-shi, Osaka 540-6207 (JP)
(74) Representative: Novagraaf International SA
(86) International application number: PCT/JP2020/038925
(87) International publication number: WO 2021/131257

(57) **Abstract**

A negative electrode active material for a secondary battery includes a silicate composite particle including crystalline silicon particles, an amorphous phase comprising an Li element, an O element, and an Si element, and a silicon oxide phase, wherein the silicon oxide phase and the silicon particles are dispersed in the amorphous phase.

## Description

### [Technical Field]

The present disclosure primarily relates to an improvement in a negative electrode active material for secondary batteries.

### [Background Art]

Recently, secondary batteries such as nonaqueous electrolyte secondary batteries are expected as a power source for small consumer applications, power storage devices, and electric vehicles, because of their high voltage and high energy density. With a demand for high-energy density in batteries, as a negative electrode active material having a high theoretical capacity density, use of a material containing silicon capable of being alloyed with lithium is expected.

However, since the material containing silicon has a large irreversible capacity, there is a problem in that the initial charge/discharge efficiency (in particular, the ratio of the initial discharge capacity to the initial charge capacity) is low. Therefore, various techniques have been proposed in which lithium corresponding to the irreversible capacity is introduced into a material containing silicon in advance. Specifically, it has been proposed to use a composite particle containing a lithium silicate phase and silicon particles dispersed in the lithium silicate phase (Patent Literature 1). Silicon particles contribute to the charge-discharge response (reversible lithium storage and release).

The composite particles are produced by sintering a mixture of, for example, glassy lithium silicate powder and silicon particles at high temperature and in a high pressure atmosphere. In this case, the lithium silicate phase has crystallinity, and in the X-ray diffraction pattern, a distinct peak derived from lithium silicate appears.

### [Citation List]

### [Patent Literature]

PLT1: Japanese Laid-Open Patent Publication No. 2015-153520

### [Summary of Invention]

It is known that the above composite particles have a large degree of expansion and contraction of silicon particles accompanied by storage and release of lithium during charging and discharging. As a result, expansions and contractions of the silicon particles cause the lithium silicate phase existing around the silicon particles to be highly stressed, thereby cracking and splitting the composite particles. Along with this, the bonding force between the composite particle and the binder around is weakened, and particularly the cracked composite particle is isolated by losing the conductive path with the periphery particles. Further, side reactions between the electrolyte solution and silicon particles are promoted. As a result, the charge/discharge cycle characteristics are lowered.

One aspect of the present disclosure relates to a negative electrode active material for a secondary battery, the negative electrode active material including a silicate composite particle, the silicate composite particle including crystalline silicon particles, an amorphous phase including an Li element, an O element, and an Si element, and a silicon oxide phase, wherein the silicon oxide phase and the silicon particles are dispersed in the amorphous phase.

Another aspect of the present disclosure relates to a secondary battery including a positive electrode, a negative electrode, an electrolyte, and a separator interposed between the positive electrode and the negative electrode, wherein the negative electrode includes a current collector and a negative electrode active material layer, and the negative electrode active material layer includes the active material for a secondary battery described above.

By using the negative electrode active material of the present disclosure, a secondary battery with excellent charge and discharge cycle characteristics can be obtained.

### [Brief Description of Drawings]

[FIG. 1] FIG. 1 is a cross-sectional view schematically showing a negative electrode active material (LSX particle) according to an embodiment of the present disclosure.
[FIG. 2] FIG. 2 is a schematic perspective partially cutaway view of a secondary battery according to an embodiment of the present disclosure.
[FIG. 3] FIG. 3 is a diagram showing an exemplary diffraction pattern by XRD of LSX particles.

### [Description of Embodiments]

A negative electrode active material for a secondary battery according to an embodiment of the present disclosure includes a silicate composite particle (in the following, also referred to as LSX particle) including crystalline silicon particles, an amorphous phase (also referred to as "amorphous lithium silicate phase" or simply "lithium silicate phase" in the following) including an Li element, an O element, and an Si element, and a silicon oxide phase. By using such a negative electrode active material, stresses associated with expansion and contraction of silicon particles are relaxed by the amorphous lithium silicate phase, and cracking and splitting of the composite particles can be suppressed. Therefore, the reduction of the charge/discharge cycle characteristics is suppressed.

In the LSX particles, a plurality of primary particles containing the lithium silicate phase and the silicon particles are bonded to each other to constitute secondary particles. Considering the secondary particles as a whole, the LSX particles have a sea-island structure, in which silicon particles as islands, are dispersed in the lithium silicate phase, which is a sea. The capacity can be increased by controlling the amount of silicon particles dispersed in the lithium silicate phase, and since the silicon particles are dispersed in the lithium silicate phase, the expansion and contraction of the LSX particles during charge and discharge can be easily suppressed. Furthermore, because the lithium silicate phase is amorphous, the expansion and contraction of LSX particles are remarkably suppressed. Therefore, it is easy to achieve both a high-capacity battery and improved cycle characteristics.

Conventionally, composite particles can be produced by mixing lithium silicate powder and silicon particles, grinding the mixture with a ball mill or the like to make composite particles, and sintering the mixture after grinding at a high temperature and in a high pressure atmosphere. As the lithium silicate powder, an amorphous one may be used, or one having crystallinity may be used. However, even when a crystalline lithium silicate powder is used, the crystalline lithium silicate may be changed to amorphous due to the addition of shearing force due to stirring of the mixture. Sintering at high temperatures restores the crystallinity of the lithium silicate, resulting in composite particles in which silicon particles are dispersed in the crystalline lithium silicate phase.

In contrast, in this embodiment, composite particles are formed without performing sintering at a high temperature. As necessary, heat treatment and/or pressure treatment may be performed at a relatively low temperature (e.g., 450°C or less) such that the lithium silicate does not crystallize. Thus, crystal growth of lithium silicate is suppressed, and LSX particles in which silicon particles are dispersed in an amorphous lithium silicate phase are obtained. The LSX particles tend to have increased charge capacity in the initial charge/discharge due to the amorphous lithium silicate phase. Furthermore, because the LSX particles contain many amorphous substances more flexible than crystals, the lithium silicate phase can follow the expansion and contraction of silicon, and the frequency at which silicon particles are isolated and cannot be charged and discharged decreases. As a result, the decrease in capacity in the charge/discharge cycle after the first time is remarkably suppressed. Therefore, the LSX particles of the present embodiment are advantageous in consideration of a large number of charge and discharge cycles.

By grinding to make a composite material, the particle size distribution of the lithium silicate powder is widened. As a result, a large amount of fine powder of lithium silicate having a small particle size is contained in the mixture after grinding. In conventional methods, such fine powders are integrated with the lithium silicate phase of the composite particles by sintering at high temperature and under high pressure. In contrast, in the process of the present embodiment in which no sintering is performed at a high temperature and under a high pressure, the surface area of the LSX particles to be produced becomes large, and side reactions may increase. For this reason, preferably, the mixture after stirring is classified to remove lithium silicate particles having a small particle size.

The LSX particles are produced by grinding silicon and lithium silicate to make a composite material. When the amount of lithium of lithium silicate is small and the amount of silicon oxide is large, silicon oxide is generated in the production process of lithium silicate. A large part of the silicon oxide becomes amorphous in the grinding process, but crystalline silicon oxide is finely precipitated in the subsequent heating step. Crystalline silicon oxide is stable and does not react with lithium ions even at the time of charging, without causing irreversible reaction, and is fine so that expansion and contraction of silicon particles are hardly hindered.

On the other hand, if many crystals of lithium silicate such as Li₂Si₂O₅ are contained, the LSX particles tend to cause cracking of the particles due to expansion and contraction. In addition, the lithium silicate phase tends to follow the expansion and contraction of the silicon particles because amorphous substances are more flexible than crystal substances. Therefore, by interposing two phases of the crystal silicon oxide phase of and the amorphous lithium silicate phase, stresses associated with expansion and contraction of silicon particles can be further relaxed. Thus, a negative electrode active material having good cycle characteristics and small irreversible capacity can be realized.

The silicon oxide phase may be present in the LSX particles dispersed within the amorphous lithium silicate phase. That is, within the amorphous lithium silicate phase, a silicon oxide phase and silicon particles may be present independently in a dispersed manner.

In the diffraction patterns of the LSX particles of the present embodiment by X-ray diffraction (XRD), peaks derived from the silicon particles and silicon oxide phase may appear. On the other hand, a peak derived from lithium silicate does not substantially appear. Specifically, peaks derived from the Si (111) plane of silicon particles may appear near 2θ=28°. In addition, peaks derived from the SiO₂ (011) plane of the silicon oxide phase may appear near 2θ=26°. The half-width W₁ of the peaks derived from the Si (111) plane of silicon particles may be, for example, 0.3 or more and 1.5 or less. The half-width W₂ of the peaks derived from the SiO₂ (011) plane of the silicon-oxide phase may be, for example, 0.2 or more and 0.6 or less. For the X-rays used in the XRD method, Kα rays of Cu are used. The above-mentioned half-value widths W₁ and W₂ mean the full width at half maximum indicating a range in which the value is a half-value or more of the maximum value at the peaks.

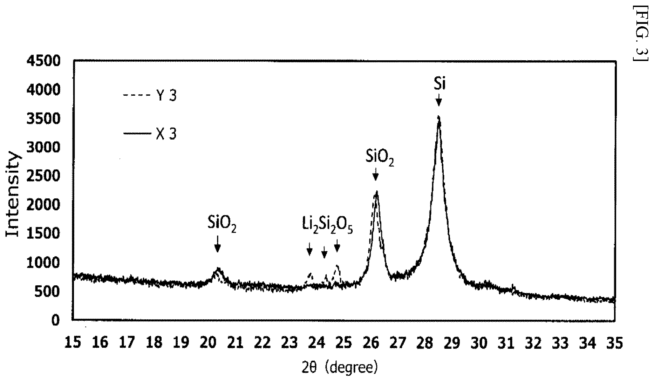

FIG. 3 shows examples of the XRD diffraction pattern of the LSX particles of the present embodiment and conventional LSX particles. In FIG. 3, the diffraction pattern of the LSX particles X3 shown by solid lines relates to the LSX particles of the present embodiment, and the diffraction pattern of the LSX particles Y3 shown by broken lines relates to the LSX particles of the conventional example. The LSX particles X3 correspond to Example 3 (battery A3) in Examples described later, and the LSX particles Y3 correspond to Comparative Example 3 (battery B3).

In both LSX particles X3 and Y3, peaks derived from the Si (111) plane of silicon particles are observed near 2θ=28°. In addition, peaks derived from the SiO₂ (011) plane of the silicon oxide phase are observed near 2θ=26°. Furthermore, in the case of LSX particles Y3, peaks derived from the lithium silicate Li₂Si₂O₅ are observed near 2θ=24°. On the other hand, with the LSX particle X3, there is no peak near 2θ=24°. Although not observed in LSX particles X3 and Y3, peaks derived from lithium silicate Li₂SiO₃ may appear near 2θ=19°. The peak near 2θ=20° is the peak derived from SiO₂.

In the XRD pattern, peaks derived from the Si (111) plane of the silicon particles are separated, and integrated intensities obtained by integrating the separated peaks at 2θ=23° to 30° are denoted by I₁. Similarly, peaks derived from the SiO₂ (011) plane of the silicon oxide phase are separated, and integrated intensities obtained by integrating the separated peaks at 2θ=23° to 30° are denoted by I₂. A is the sum of I₁ and I₂. Furthermore, B is the integrated intensity obtained by removing the peaks derived from the silicon particles and the silicon-oxide phase from the total integrated intensity Iₜₒₜₐₗ in the range of 2θ=23° to 30°. The integrated intensity B may include contribution by crystalline lithium silicate. At this time, the ratio B/A of the integrated intensity B to the integrated intensity A may be 0.03 or less. In this case, the effect of suppressing the decrease of the charge/discharge cycle characteristics is remarkable. The ratio B/A may be 0.02 or less, or 0.01 or less.

In the LSX particle, the amorphous lithium silicate phase contains an oxide phase represented by, for example, formula: Li_{2z}SiO_{2 + z} (0 < z < 1). In view of stability, ease of manufacture, lithium-ion conductivity, etc., z=1/2 is preferable.

The lithium silicate phase may contain elements other than Li, Si, and O (oxygen). The lithium silicate phase may contain, for example, at least one selected from the group consisting of alkali-metal elements (except Li) and Group II elements.

By including an alkali metal element other than Li in the lithium silicate phase, crystallization becomes hard to proceed, the viscosity in the molten state becomes low, and the fluidity is increased. Therefore, even in the heat treatment at a low temperature, the gaps between silicon particles are easily filled, and dense composite particles are easily generated. The alkali metal element may be Na and/or K because it is inexpensive. The atomic ratio X/Li of the alkaline element X (e.g., K) other than Li contained in the lithium silicate phase to Li may be, for example, 0.1 to 7.1, 0.4 or more and 5 or less, or 0.7 or more and 2 or less.

The lithium silicate phase may include Group II element. Generally, the silicate phase exhibits alkaline properties, but Group II elements works to suppress elution of alkali metals from the silicate phase. Therefore, when a slurry containing a negative electrode active material is prepared, the slurry viscosity tends to be stabilized. Therefore, the need for a process (e.g., acid treatment) for neutralizing the alkali component of the LSX particles is also reduced.

As the Group II element, at least one selected from the group consisting of Be, Mg, Ca, Sr, Ba, and Ra can be used. Among these, Ca is preferable in that Ca can improve Vickers hardness of lithium silicate phase and further improve cycle characteristics. The content of the group II element is, for example, 20 mol% or less, may be 15 mol% or less, or may be 10 mol% or less, based on the total amount of elements other than O contained in the lithium silicate phase.

The lithium silicate phase may contain an element M other than the alkali-metal element and the Group II element. The element M is at least one selected from the group consisting of B, Al, Zr, Nb, Ta, La, V, Y, Ti, P, Bi, Zn, Sn, Pb, Sb, Co, Er, F, and W. In particular, for example, B has a low melting point and is beneficial for improving flowability in sintering. Although Ca reduces ion conductivity, it has an action of increasing the hardness of the lithium silicate phase. Al, Zr, Nb, Ta, and La may improve hardness while retaining ion conductivity. The content of the element M is, for example, 10 mol% or less relative to the total amount of elements other than O contained in the lithium silicate phase, and may be 5 mol% or less.

The content of B, Na, K, and Al contained in lithium silicate phase is determined by quantitative analysis according to JIS R3105 (1995) (Methods for chemical analysis of borosilicate glasses), whereas Ca content is determined by quantitative analysis according to JIS R3101 (1995) (Methods for chemical analysis of Soda-Lime-Magnesia-Silica glasses).

The remaining elements are determined by the method below. First, a sample of lithium silicate phase or LSX particles containing the same is completely dissolved in a heated acid solution (mixed acid of hydrofluoric acid, nitric acid, and sulfuric acid), and the carbon of the solution residue is filtered and removed. Afterwards, the resulting filtrate is analyzed by inductively coupled plasma-atomic emission spectrometry (ICP-AES) to determine the spectral intensities of the respective elements. Subsequently, a calibration curve is prepared using standard solutions of commercially available elements, and content of each element contained in the lithium silicate phase is calculated.

In the silicate composite particles, a lithium silicate phase, a silicon oxide phase, and silicon particles are present, and these can be distinguished and quantified by using a Si-NMR The Si content obtained by ICP-AES as described above is the sum of the amount of Si constituting silicon particles, the amount of Si in the lithium silicate phase, and the amount of Si in the silicon oxide phase. On the other hand, the amount of Si constituting silicon particles can be separately quantified using a Si-NMR Therefore, by subtracting the amount of Si constituting silicon particles and the amount of Si in the silicon oxide phase from the Si content obtained by ICP-AES, the amount of Si in the lithium silicate phase can be quantified. As a reference material required for quantitation, a mixture containing a silicate phase and silicon particles having a known Si content in a predetermined ratio may be used.

Preferable Si-NMR measurement conditions are shown below.

### <Si-NMR Measurement conditions>

Measuring equipment: Solid-state nuclear magnetic resonance spectrometer (INOVA 400) manufactured by Varian Medical Systems
Probe: Varian 7 mm CPMAS-2
MAS:4.2 kHz
MAS speed: 4 kHz
Pulse: DD (45° pulse + signal uptake time 1H decoupled)
Repetition time: 1200 sec to 3000sec
Observation width: 100 kHz
Observation center: near -100 ppm
Signal uptake time: 0.05 sec
Total number of times: 560
Sample volume: 207.6 mg

In order to increase the capacity and improve cycle characteristics, content of silicon particles in the LSX particles may be, for example, 30 mass% or more, and 80 mass% or less. By setting the content of silicon particles to 30 mass% or more, the ratio of lithium silicate phase is reduced, and the initial charge/discharge efficiency is easily improved. By setting the content of silicon particles to 80 mass% or less, the degree of expansion and contraction of LSX particles during charging and discharging can be easily reduced.

The silicon particles dispersed in the lithium silicate phase have a particulate phase of elemental silicon (Si) and are composed of a single or a plurality of crystallites. Preferably, the crystallite size of silicon particles is 30 nm or less. When the crystallite size of silicon particles is 30 nm or less, the volume change due to expansion and contraction of silicon particles due to charging and discharging can be reduced, and cycle characteristics can be further enhanced. In particular, the isolation of the silicon particles is suppressed, the isolation due to voids formed around the silicon particles from contraction of the silicon particles to reduce contact points with the periphery of the particles. Therefore, decrease in charge/discharge efficiencies due to the isolation of the particles is suppressed. The lower limit of the crystallite size of silicon particles is not particularly limited, but is, for example, 5 nm.

The crystallite size of silicon particles is more preferably 2 nm or more, and 30 nm or less, and more preferably 2 nm or more, and 20 nm or less. When the crystallite size of silicon particles is 20 nm or less, the expansion and contraction of silicon particles can be made uniform, and cycle characteristics can be improved by reducing the fine cracks of the particles due to the expansion and contraction of the silicon particles during charge and discharge. The crystallite size of silicon particles is calculated by the Sheller's equation from the half width of the diffraction peak assigned to the Si (111) plane of the X-ray diffraction (XRD) pattern of the silicon particles.

At least a portion of the surface of the LSX particles may be coated with a conductive material. Since the lithium silicate phase has poor electronic conductivity, the conductivity of the LSX particles tends to be low. However, by coating the surfaces of secondary particles of the lithium silicate phase with conductive materials to form conductive layers, the conductivity of the LSX particles can be dramatically enhanced. The carbon material is a preferable conductive material. Preferably, the carbon material includes at least one selected from the group consisting of a carbon compound and a carbonaceous substance.

Preferably, the thickness of the conductive layer is substantially thin so that it does not affect the average particle size of the LSX particles. The thickness of the conductive layer is preferably 1 to 200 nm, and more preferably 5 to 100 nm considering securement of conductivity and the diffusivity of lithium ions. The thickness of the conductive layer can be measured by cross-sectional observation of LSX particles using SEM or TEM (transmission electron microscope).

Examples of the carbon compound include a compound containing, for example, carbon and hydrogen, and a compound containing carbon, hydrogen, and oxygen. As the carbonaceous substance, amorphous carbon having low crystallinity, graphite having high crystallinity, or the like can be used. Examples of the amorphous carbon include carbon black, coal, coke, charcoal, and activated carbon. Examples of the graphite include natural graphite, artificial graphite, graphitized mesophase carbon particles, and the like. Among them, amorphous carbons are preferable because of their low hardness and their large buffering effect on silicon particles, which change volume by charging and discharging. The amorphous carbon may be soft carbon, or hard carbon. Examples of the carbon black include acetylene black and Ketjen black.

The LSX particles can be removed from battery by the following technique. First, the battery is disassembled to take out the negative electrode, and the negative electrode is washed with anhydrous ethyl methyl carbonate or dimethyl carbonate to remove the electrolyte solution. Next, the negative electrode mixture is peeled off from the copper foil and ground in a mortar to obtain a sample powder. Next, the sample powder is dried in a dry atmosphere for 1 hour and immersed in a weakly boiled 6M hydrochloric acid for 10 minutes to remove alkali metals such as Na and Li which can be contained in a binder or the like. Next, the sample powder is washed with ion-exchanged water, filtered off, and dried at 200°C for 1 hour. Afterwards, in an oxygen atmosphere, only LSX particles can be isolated by heating to 900°C to remove the carbon components.

The cross section of the LSX particles can be observed by, for example, the method below. First, the battery is disassembled, and the negative electrode is taken out. A cross-section polisher (CP) is used to obtain a cross-section of the negative electrode mixture layer. A scanning electron microscopy (SEM) is used to observe the cross-section of the negative electrode mixture layer. From the cross-sectional image of the reflected electron image of the negative electrode mixture layer, 10 LSX particles having the largest diameter of 5 µm or more are randomly selected, and the respective LSX particles are analyzed by element mapping (e.g., carbon) by energy-dispersive X-ray (EDX). The area where the target element is contained is calculated using an image analysis software. The observation magnification is desirably 2000 to 20000. The area where the predetermined element is contained is measured from 10 particles, and the measured values are averaged.

In the process of charging and discharging, a coating film is formed on the surface of the LSX particles by decomposition or the like of the electrolyte. As described later, the LSX particles may further include a conductive layer covering the surface of the composite particles. Therefore, mapping analysis by EDX is performed for the range inner from the peripheral edge of the cross-section of the LSX particles by 1 µm, so that the measuring range does not include a thin coating or the conductive layer. The state of the distribution of the carbon material in the LSX particles can also be confirmed by the mapping analysis by EDX. Preferably, samples prior to or early in the cycle are subjected to measurements because it is difficult to distinguish decomposed products of electrolyte at the terminal period of the cycle.

Preferable cross-sectional SEM-EDX analysis conditions are shown below.

### <SEM-EDX Measurement conditions>

Processing Equipment: manufactured by JEOL, SM-09010(Cross Section Polisher)
Processing conditions: Acceleration voltage 6kV
Current value: 140 µA
Vacuum degree: 1 × 10⁻³ to 2 × 10⁻³ Pa
Measuring device: electron microscopy manufactured by HITACHI, SU-70
Acceleration voltage at analysis: 10 kV
Field: Free mode
Probe Current Mode: Medium
Probe Current Range: High
Anode Ap.:3
OBJ Ap.:2
Analysis area: 1 µm square
Analysis Software: EDAX Genesis
CPS:20500
Lsec:50
Time constant: 3.2

Furthermore, in addition to SEM-EDX spectroscopy, Auger electron spectroscopy (AES), laser ablation ICP mass spectroscopy (LA-ICP-MS), X-ray photoelectron spectroscopy (XPS), and the like can be used to quantify the elements in the silicate composite particles contained in the negative electrode active material layer in discharged state.

Next, a production method of LSX particles will be described in detail.

### Step (i)

As a raw material of lithium silicate, a raw material mixture containing a raw material containing Si and a Li raw material at a predetermined ratio is used. The raw material mixture may contain an alkali metal element, a Group II element, and/or an element M described above. A mixture obtained by mixing a predetermined amount of the above raw material is dissolved, and the melt is flaked through a metal roll to prepare a lithium silicate. Thereafter, the flaked silicate is crystallized by heat treatment at a temperature of a glass transition point or more, and the melting point or less in an air atmosphere. The flaked silicate can also be used without crystallization. The silicates can also be produced by solid phase reaction, by firing at a temperature of the melting point or less without dissolving the mixture mixed in a predetermined amount.

For the Si raw material, silicon oxide can be used. As the Li raw material, for example, lithium carbonate, lithium oxide, lithium hydroxide, lithium hydride, or the like can be used. These may be used singly, or two or more kinds may be used in combination. Examples of the raw material of the alkali metal element, the Group II element, and the element M include an oxide, a hydroxide, a carbonic acid compound, a hydride, a nitrate, and a sulfate of each element.

In the lithium silicate, an Si raw material which has not reacted with the Li raw material may remain. The remaining Si raw material is dispersed in the lithium silicate as a silicon oxide phase.

### Step (ii)

Next, the raw material silicon is blended into the lithium silicate to make a composite. For example, composite particles are produced through steps (a) to (c) below.

### Step (a)

First, a powder of raw material silicon and a powder of lithium silicate are mixed at a mass ratio of, for example, 20:80 to 95:5. As the raw silicon, coarse particles of silicon having an average particle size of about several µm to several tens of µm may be used.

### Step (b)

Next, using a grinding apparatus such as a ball mill, a mixture of raw silicon and lithium silicate is ground while forming microparticles to make a composite. At this time, an organic solvent may be added to the mixture for wet-grinding. A predetermined amount of an organic solvent may be charged into the grinding vessel at a time at an initial stage of grinding, or a predetermined amount of an organic solvent may be intermittently charged into the grinding vessel dividedly a plurality of times in the grinding process. The organic solvent serves to prevent the object to be ground from adhering to the inner wall of the grinding vessel.

As the organic solvent, an alcohol, ether, fatty acid, alkane, cycloalkane, silicate ester, metal alkoxide, or the like can be used.

The raw material silicon and the lithium silicate may be separately formed into microparticles and then mixed. Also, silicon nanoparticles, and amorphous lithium silicate nanoparticles may be prepared and mixed without using a grinding apparatus. For producing the nanoparticles, a known method such as a gas phase method (e.g., a plasma method) or a liquid phase method (e.g., a liquid phase reduction method) may be used.

### Step (c)

The mixture of microparticles is then classified to remove components with a small particle size. By classification, fine particles of lithium silicate having a particle size of, for example, 0.5 µm or less can be removed. The classifier used for classification is not particularly limited as long as it can classify fine particles having a particle diameter of 0.5 µm or less. Classification, however, is generally performed by placing the fine particles in a fluid stream, applying a force (e.g., inertial force or centrifugal force) to the microparticles through the fluid, utilizing the difference in the forces acting on the microparticles depending on the particle sizes. Therefore, it is necessary that the fluid (gas or liquid) used for classification has low reactivity with lithium silicate. In this respect, a dry classifier using a gas as a fluid is preferably used as the classifier. However, if a liquid having low reactivity with lithium silicate is used for the fluid, a wet classifier may be used. The principles for classification of the classifier are not particularly limited, and the classifier may utilize, for example, inertial force or centrifugal force. An elbow-jet classifier utilizing the Coanda effect may be used.

### Step (iii)

Next, at least a portion of the surface of the composite particle (secondary particle) may be coated with a conductive material to form a conductive layer. The conductive material is preferably electrochemically stable, and the conductive carbon material is preferable. As a manner of coating the surface of the composite particles with a conductive carbon material, a CVD method using a hydrocarbon gas such as acetylene or methane as a raw material, a method in which a coal pitch, a petroleum pitch, a phenol resin, or the like is mixed with composite particles and heated and carbonized can be exemplified. Further, carbon black may be adhered to the surface of the composite particles. The coating of the conductive carbon material can be performed by heating a mixture of the conductive carbon material and the composite particle from which the fine particles have been removed, for example, in an inert atmosphere (for example, an atmosphere of argon, nitrogen, or the like) at 700°C to 950°C.

### Step (iv)

A step of cleaning the composite particles (including those having a conductive layer on the surface), with an acid may be performed. For example, by washing the composite particles with an acidic aqueous solution, a trace amount of an alkali component present on the surface of the composite particles, which may be formed when the raw silicon and the lithium silicate are made into a composite, can be dissolved and removed. As the acidic aqueous solution, an aqueous solution of an inorganic acid such as hydrochloric acid, hydrofluoric acid, sulfuric acid, nitric acid, phosphoric acid, or carbonic acid, or an aqueous solution of an organic acid such as citric acid or acetic acid can be used.

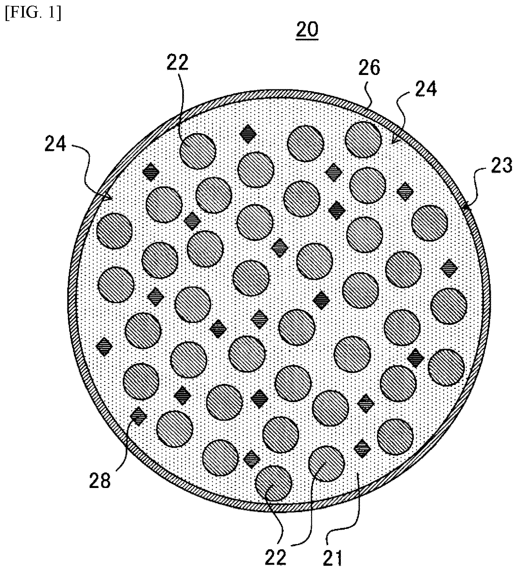

FIG. 1 schematically shows a cross section of a LSX particle 20 as an example of the negative electrode material.

The LSX particle 20 include a mother particle 23 composed of secondary particles in which a plurality of primary particles 24 are aggregated. The mother particle 23 (primary particle 24) includes an amorphous lithium silicate phase 21, silicon particles 22 dispersed in the lithium silicate phase 21, and a silicon oxide phase 28. The mother particle 23 has a sea-island structure in which fine silicon particles are dispersed in a matrix of the lithium silicate phase 21. The surface of the mother particle 23 may be coated with a conductive layer 26.

Both of the lithium silicate phase 21 and silicon particles 22 are constituted by aggregating fine primary particles. In the lithium silicate phase 21, a silicon oxide phase 28 may also be dispersed. The SiO₂ content in the mother particle 23 measured by Si-NMR is preferably, for example, 30 mass% or less, and more preferably less than 7 mass%.

The mother particle 23 may include other components, in addition to the lithium silicate phase 21, silicon particles 22, silicon oxide phase 28, and carbon material. In view of improving strength of the mother particles 23, a reinforcing material such as oxide including ZrO₂, or carbide, may be included in the mother particles 23 up to less than 10 wt% relative to the mother particles 23.

The average particle size of the primary particles 24 is preferably 0.2 to 10 µm, more preferably 2 to 8 µm. This makes it easier to relax the stresses caused by the volume change of silicon particles associated with charging and discharging, thereby making it easier to obtain good cycle characteristics. Further, since the surface area of the LSX particles becomes moderate, the decrease in capacity due to side reactions with the electrolyte is also suppressed.

The average particle size of the primary particles 24 is measured by observing cross-sections of the negative electrode materials using SEM. Specifically, it is determined by averaging the diameter of an equivalent circle of the cross-sectional area of any 100 primary particles 24 (a circle having the same area as the cross-sectional area of the primary particles).

The average particle size of the silicon particles 22 is 500 nm or less, preferably 200 nm or less, and more preferably 50 nm or less prior to initial charging. Such suitable micronizing of silicon particles 22 reduces the change in volume during charging and discharging, thereby improving structural stability. In addition, the expansion and contraction of silicon particles are made uniform, and cycle characteristics are improved by suppressing the cracking of the particles. The average particle size of the silicon particles 22 is measured by observing cross-sections of the negative electrode material using SEM or TEM. Specifically, the maximum diameters of arbitrarily selected 100 silicon particles 22 are averaged.

A secondary battery according to an embodiment of the present disclosure includes a positive electrode, a negative electrode, an electrolyte, and a separator interposed between the positive electrode and the negative electrode. The negative electrode includes a current collector and a negative electrode active material layer including the negative electrode active material for a secondary battery described above. In the following, the negative electrode, positive electrode, electrolyte, and separator included in the secondary battery according to the embodiment of the present disclosure will be described.

### [Negative Electrode]

The negative electrode includes a negative electrode current collector and a negative electrode mixture layer formed on the negative electrode current collector surface and having a negative electrode active material. The negative electrode active material layer can be formed, for example, by coating a negative electrode slurry in which a negative electrode mixture is dispersed in a dispersion medium, on a surface of the negative electrode current collector, and drying the slurry. The dried coating film may be rolled, if necessary. The negative electrode mixture layer may be formed on one surface of the negative electrode current collector, or on both surfaces thereof.

The negative electrode mixture contains, as a negative electrode active material, a negative electrode active material for a secondary battery containing LSX particles described above as an essential component, and as an optional component, a binder, a conductive agent, a thickener, and the like can be included. Silicon particles in the LSX particles can absorb many lithium ions, and therefore contribute to increase in the capacity of the negative electrode.

The negative electrode active material may further include other active material that electrochemically stores and releases lithium ions. As another active material, for example, a carbon-based active material is preferable. Since the volume of the LSX particles expands and contracts with charging and discharging, when the ratio thereof in the negative electrode active material increases, contact failure between the negative electrode active material and the negative electrode current collector tends to occur with charging and discharging. On the other hand, when the LSX particles and a carbon-based active material are used in combination, excellent cycle characteristics can be achieved while a high capacity of silicon particles are given to the negative electrode. The ratio of the LSX particles to the sum of LSX particles and carbon-based active material is, for example, preferably 0.5 to 15 mass%, and more preferably 1 to 5 mass%. This allows achievement in both higher capacity and higher cycle characteristics easily.

Examples of the carbon-based active material include graphite, soft carbon, hard carbon, and the like. Preferred among them is graphite, which is excellent in stability during charging and discharging and has small irreversible capacity. Graphite means a material having a graphite type crystal structure, and includes, for example, natural graphite, artificial graphite, graphitized mesophase carbon particles, and the like. A kind of carbon-based active material may be used singly, or two or more kinds may be used in combination.

As the negative electrode current collector, a non-porous conductive substrate (metal foil, etc.), a porous conductive substrate (mesh-body, net-body, punched sheet, etc.) is used. As the material of the negative electrode current collector, stainless steel, nickel, nickel alloy, copper, copper alloy, and the like can be exemplified. The thickness of the negative electrode current collector is not particularly limited, but in view of balance between strength and weight reduction of the negative electrode, 1 to 50 µm is preferable, and 5 to 20 µm is more preferable.

Examples of the binder include fluororesin, polyolefin resin, polyamide resin, polyimide resin, vinyl resin, styrene-butadiene copolymer rubber (SBR), polyacrylic acid, and derivatives thereof. These may be used singly or in combination of two or more. Examples of the conductive agent include carbon black, conductive fibers, fluorinated carbon, and organic conductive materials. These may be used singly or in combination of two or more. Examples of the thickeners include carboxymethyl cellulose (CMC) and polyvinyl alcohol. These may be used singly or in combination of two or more.

Examples of the dispersion medium include water, alcohol, ether, N-methyl-2-pyrrolidone (NMP), or a mixture solvent thereof.

### [Positive Electrode]

The positive electrode includes, for example, a positive electrode current collector, and a positive electrode mixture layer formed on the surface of the positive electrode current collector. The positive electrode mixture layer can be formed, for example, by applying a positive electrode slurry in which a positive electrode mixture is dispersed in a dispersion medium, on a surface of the positive electrode current collector, and drying the slurry. The dried coating film may be rolled, if necessary. The positive electrode mixture layer may be formed on one surface of the positive electrode current collector, or may be formed on both surfaces thereof.

The positive electrode mixture contains a positive electrode active material as an essential component, and may contain a binder, a conductive agent, and the like as an optional component.

As the positive electrode active material, a lithium composite metal oxide can be used. Examples of the lithium composite metal oxide include LiₐCoO₂, LiₐNiO₂, LiₐMnO₂, LiₐCo_{b}Ni_{1-b}O_{c}, LiₐCo_{b}M_{1-b}O_{c}, LiₐNi_{1-b}M_{b}O_{c}, LiₐMn₂O₄, LiₐMn_{2-b}M_{b}O₄, LiMePO₄, and Li₂MePO₄F. Here, M is at least one selected from the group consisting of Na, Mg, Sc, Y, Mn, Fe, Co, Ni, Cu, Zn, Al, Cr, Pb, Sb, and B. Me includes at least a transition element (e.g., at least one element selected from the group consisting of Mn, Fe, Co, and Ni). Here, 0 ≤ a ≤ 1.2, 0 ≤ b ≤ 0.9, and 2.0 ≤ c ≤ 2.3. The value "a" indicating the molar ratio of lithium is a value immediately after preparation of the active material, and increases or decreases by charging and discharging.

As the binder and the conductive agent, those exemplified for the negative electrode can be used. As the conductive agent, graphite such as natural graphite or artificial graphite may be used.

The shape and thickness of the positive electrode current collector can be selected from the shapes and ranges according to the negative electrode current collector. Examples of the material of the positive electrode current collector may be, for example, stainless steel, aluminum, aluminum alloy, titanium, or the like.

### [Electrolyte]

The electrolyte includes a solvent and a lithium salt dissolved in the solvent. The concentration of lithium salt in the electrolyte is, for example, 0.5 to 2 mol/L. The electrolyte may contain a known additive.

As the solvent, an aqueous solvent or a nonaqueous solvent is used. As the nonaqueous solvent, for example, cyclic carbonic acid ester, a chain carbonic acid ester, a cyclic carboxylic acid ester, or the like is used. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). A kind of nonaqueous solvent may be used singly, or two or more kinds thereof may be used in combination.

As the lithium salt, a lithium salt of, for example, chlorine-containing acid (such as LiClO₄, LiAlCl₄, LiB₁₀Cl₁₀), a lithium salt of fluorine-containing acid (such as LiPF₆, LiBF₄, LiSbF₆, LiAsF₆, LiCF₃SO₃, LiCF₃CO₂), a lithium salt of fluorine-containing acid imide (such as LiN (CF₃SO₂)₂, LiN (CF₃SO₂)(C₄F₉SO₂), LiN (C₂F₅SO₂)₂, or the like), a lithium halide (LiCl, LiBr, Lil, or the like), or the like can be used. A kind of lithium salt may be used singly, or two or more kinds thereof may be used in combination.

### [Separator]

Usually, it is desirable to interpose a separator between the positive electrode and the negative electrode. The separator has excellent ion permeability and suitable mechanical strength and electrically insulating properties. The separator may be, for example, a microporous thin film, a woven fabric, or a nonwoven fabric. As a material of the separator, a polyolefin such as, for example, polypropylene or polyethylene may be used.

The structure of the secondary battery can be, for example, a structure in which an electrode group formed by winding a positive electrode and a negative electrode with a separator interposed therebetween and an electrolyte are accommodated in an outer case. Alternatively, other forms of electrode group may be applied, such as a laminated electrode group formed by laminating the positive electrode and the negative electrode with a separator interposed therebetween, instead of the wound electrode group. The secondary batteries may be of any form, for example, a cylindrical type, prismatic type, coin type, button type, laminated type, etc.

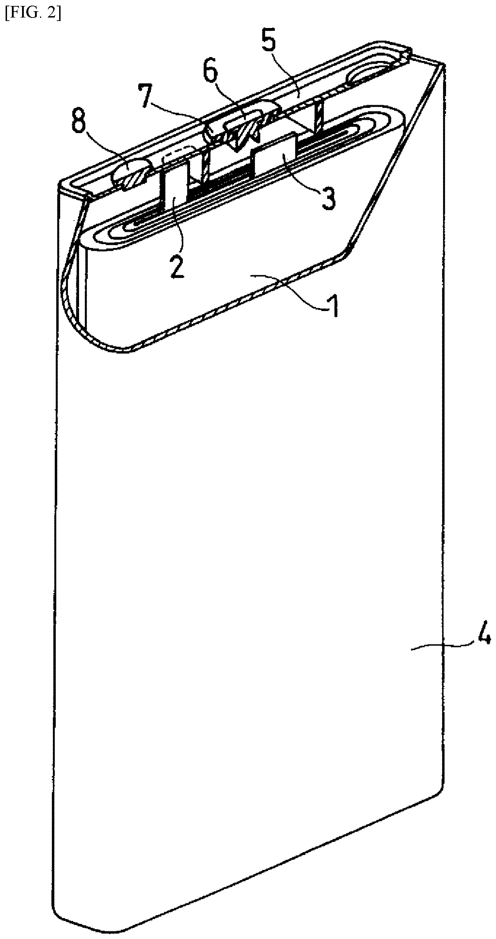

FIG. 2 is a schematic perspective partially cutaway view of a prismatic secondary battery according to an embodiment of the present disclosure.

The battery includes a bottomed prismatic battery case 4, an electrode group 1 and an electrolyte contained within the battery case 4, and a sealing plate 5 which seals the opening of the battery case 4. The electrode group 1 has a negative electrode in the form of a long strip, a positive electrode in the form of a long strip, and a separator interposed therebetween. The electrode group 1 is formed by winding the negative electrode, the positive electrode, and the separator around a flat core and removing the core. The sealing plate 5 has an injection port plugged with a sealing plug 8 and a negative electrode terminal 6 insulated from the sealing plate 5 with a gasket 7.

One end of the negative electrode lead 3 is attached to the negative electrode current collector of the negative electrode by welding, etc. One end of the positive electrode lead 2 is attached to the positive electrode current collector of the positive electrode by welding, etc. The other end of the negative electrode lead 3 is electrically connected to the negative electrode terminal 6. The other end of the positive electrode lead 2 is electrically connected to the sealing plate 5. At the upper part of the electrode group 1, a resin made frame is arranged to isolate the electrode group 1 from the sealing plate 5 and to isolate the negative electrode lead 3 from the battery case 4.

### <Examples>

In the following, the present disclosure will be described in detail based on Examples and Comparative Examples, but the present disclosure is not limited to Examples below.

### <Example 1>

### [Preparation of LSX Particles]

### Step (i)

Lithium carbonate and silicon dioxide were mixed with a molar ratio of Li₂CO₃:SiO₂=34:66, and the mixture was dissolved in an inert atmosphere at 1500°C for 5 hours, and the melt was passed through a metallic roller to form a flake, and heat treatment at 750°C for 5 hours gave a lithium silicate composite oxide existing as a mixed phase of amorphous and crystalline. The obtained lithium silicate composite oxide was ground so as to have an average particle size of 10 µm.

### Step (ii)

The lithium silicate composite oxide having an average particle size of 10 µm and a raw material silicon (3N, average particle size: 10 µm) were mixed at a mass ratio of 70:30. The mixture was put into a pot (made of SUS, volume: 500 mL) of a planetary ball mill (manufactured by Fritsch Co., Ltd., P-5), and 24 balls made of SUS (diameter: 20 mm) were placed in the pot. The lid is closed, and the mixture was subjected to grinding at 200 rpm for 25 hours in an inert atmosphere.

Next, the mixture was classified using an elbow jet classifier to remove fine particles having a particle size of less than 0.5 µm.

Thereafter, the mixture after classification was mixed with coal pitches (MCP250, JFE Chemical Co., Ltd.) and the mixture was fired at 800 °C for 5 hours in an inert gas atmosphere to cover the surfaces of the LSX particles with conductive carbon to form a conductive layer. The coating amount of the conductive layer was 5 mass% relative to the total mass of the LSX particles and the conductive layer. Afterwards, a sieve was used to obtain LSX particles (secondary particles) with an average particle size of 5 µm with conductive layer. XRD-analysis was performed on the LSX particles to determine the presence or absence of peaks derived from Si, SiO₂, Li₂Si₂O₅, and Li₂SiO₃.

### [Negative Electrode Production]

The LSX particles and graphite were mixed at a mass ratio of 5:95 and used as a negative electrode active material. The negative electrode active material, sodium carboxy methylcellulose (CMC-Na), styrene-butadiene rubber (SBR), and polyacrylic acid lithium salt were mixed at a mass ratio of 96.5:1:1.5:1, water was added, and then stirred using a mixer (T.K. HIVIS MIX, manufactured by PRIMIX Corporation) to prepare a negative electrode slurry. Next, the negative electrode slurry was applied to the surface of a copper foil so that the mass of the negative electrode mixture per 1 m² was 190 g, and the coating film was dried and then rolled to prepare a negative electrode having a negative electrode mixture layer having a density of 1.5 g/cm³ formed on both surfaces of the copper foil.

### [Positive Electrode Production]

Lithium cobaltate, acetylene black, and polyvinylidene fluoride were mixed at a mass ratio of 95:2.5:2.5, and stirred using a mixer (T.K. HIVIS MIX, manufactured by PRIMIX Corporation) after adding N-methyl-2-pyrrolidone (NMP) to prepare a positive electrode slurry. Next, the positive electrode slurry was applied to the surface of an aluminum foil, and the coating film was dried, and then rolled to prepare a positive electrode having a positive electrode mixture layer with a density of 3.6 g/cm³ formed on both surfaces of the aluminum foil.

### [Preparation of Electrolyte]

A nonaqueous electrolyte was prepared by dissolving LiPF₆ in a mixed solvent containing ethylene carbonate (EC) and diethyl carbonate (DEC) with a volume ratio of 3:7 at a concentration of 1.0 mol/L.

### [Secondary Battery Production]

A tab was attached to the electrodes, and an electrode group was produced by winding the positive electrode and the negative electrode spirally with a separator interposed so that the tabs were positioned at the outermost peripheral portion. The electrode group was inserted into an exterior body made of an aluminum laminate film, dried in vacuo at 105°C for 2 hours, and then the nonaqueous electrolyte was injected. The opening of the exterior body was sealed to obtain a secondary battery A1.

### <Example 2>

In Step (i), the mixing ratio of lithium carbonate to silicon dioxide was changed so as to have a molar ratio of Li₂CO₃:SiO₂=27:73.

Except for this, LSX particles were prepared in the same manner as in Example 1, and a negative electrode containing LSX particles was produced to obtain a secondary battery A2.

### <Example 3>

In Step (i), lithium carbonate (Li₂CO₃), silicon dioxide (SiO₂), a mixture of calcium carbonate (CaCO₃) and magnesium carbonate (MgCO₃), and a mixture of boric acid (H₃BO₃), aluminum hydroxide (Al₂(OH)₃) and lanthanum oxide (La2O₃), were mixed at a molar ratio of 20:70:2:8, and the mixture was dissolved in an inert atmosphere at 1500°C for 5 hours, and the melt was passed through a metal roller to form flakes, and heated at 750°C for 5 hours to obtain a lithium silicate composite oxide existing as a mixed phase of amorphous and crystalline.

Except for this, LSX particles were prepared in the same manner as in Example 1, and a negative electrode containing LSX particles was produced to obtain a secondary battery A3.

### <Comparative Example 1>

In Example 1, the mixing ratio of lithium carbonate to silicon dioxide in step (i) was changed to a molar ratio of Li₂CO₃:SiO₂=50:50.

Further, without classifying the mixture after grinding in step (ii), the mixture after grinding was sintered in an inert atmosphere for 4 hours at 600°C while applying pressure to the mixture by hot pressing to obtain a sintered body of the mixture.

Thereafter, the sintered body was ground and passed through a 40 µm mesh, and then were mixed with coal pitch (MCP250, JFE Chemical Corporation). The mixture was fired at 800°C in an inert atmosphere, and the surfaces of the LSX particles were covered with conductive carbon to form a conductive layer. The coating amount of the conductive layer was 5 mass% relative to the total mass of the LSX particles and the conductive layer. Afterwards, a sieve was used to obtain LSX particles (secondary particles) with an average particle size of 5 µm with conductive layers.

Using the LSX particles described above, a negative electrode was prepared in the same manner as in Example 1 to obtain a secondary battery B1.

### <Comparative Example 2>

In Comparative Example 1, the mixing ratio of lithium carbonate to silicon dioxide in Step (i) was changed to a molar ratio of Li₂CO₃:SiO₂=34:66.

Except for this, LSX particles were prepared in the same manner as in Comparative Example 1, and a negative electrode containing LSX particles was produced to obtain a secondary battery B2.

### <Comparative Example 3>

In Step (i), lithium carbonate (Li₂CO₃), silicon dioxide (SiO₂), a mixture of calcium carbonate (CaCO₃) and magnesium carbonate (MgCO₃), and a mixture of boric acid (H₃BO₃), aluminum hydroxide (Al₂(OH)₃) and lanthanum oxide (La₂O₃), were mixed at a molar ratio of 20:70:2:8, and the mixture was dissolved in an inert atmosphere at 1500°C for 5 hours, and the melt was passed through a metal roller to form flakes, and heated at 750°C for 5 hours to obtain a lithium silicate composite oxide existing as a mixed phase of amorphous and crystalline.

Except for this, LSX particles were prepared in the same manner as in Comparative Example 1, and a negative electrode containing LSX particles was produced to obtain a secondary battery B3.

The batteries of Examples and Comparative Examples were evaluated as described below.

### [Initial Discharge Capacity]

The batteries were subjected to constant current charging at a current of 1 It (800 mA) until the voltage reached 4.2 V, then to constant voltage charging until the current reached 1/20 It (40 mA) at a constant voltage of 4.2 V. After a 10 minutes pause, constant current discharge was performed at a current of 1 It (800 mA) until the voltage reached 2.75 V, and the discharge capacity was evaluated. The discharge capacity of Example 1 is set as 100, to normalize the discharge capacity of other batteries.

### [Charge and Discharge Cycle Test]

Charging and discharging were repeatedly performed under the following conditions.

### <Charge>

The batteries obtained above were subjected to constant current charging until the voltage reached 4.2 V at a current of 1 It (800 mA), and thereafter, subjected to constant voltage charging at a voltage of 4.2 V until the current reached 1/20 It (40 mA), in an environment of 25°C.

### <Discharge>

Constant current discharges was performed at 25°C at a current of 1 It (800 mA) until the voltage reached 2.75 V.

The pause period between charging and discharging was 10 minutes. The ratio of the discharge capacity at the 100th cycle to the discharge capacity at the 1st cycle was defined as the cycle retention rate, and the number of cycles of Example 1 was set as 100 to normalize the values of other batteries. If the cycle retention rate was 90 or more, it was judged that the charge/discharge cycle characteristics were good.

Table 1 shows evaluation results for the batteries A1 to A3 and B1 to B3. Table 1 also shows, from the XRD-analysis of the LSX particles used as the negative electrode active material of each battery, the presence or absence of the peak derived from the Si (111) plane, the peak derived from the SiO₂ (011) plane, the peak derived from lithium silicate (Li₂Si₂O₅, Li₂SiO₃), and the half-width (°/2θ) of the peak is shown when the peak is present. In addition, Table 1 also shows the ratio B/A of the integrated strength described above in the LSX particles used as the negative electrode active material of each battery.

**[Table 1]**

| Battery | LSX Particles | | | | | Initial Discharge Capacity | Cycle Retention Rate |
|---|---|---|---|---|---|---|---|
| | Si Half-Width W₁ | Sio₂ Half-Width W₂ | Li₂Si₂O₅ Half-Width | Li₂SiO₃ Half-Width | B/A | | |
| A1 | 0.55 | 0.52 | - | - | 0.01 | 100 | 100 |
| A2 | 0.53 | 0.45 | - | - | 0.01 | 103 | 105 |
| A3 | 0.52 | 0.4 | - | - | 0.01 | 104 | 111 |
| B1 | 0.54 | - | - | 0.5 | 0.5 | 90 | 89 |
| B2 | 0.55 | - | 0.3 | 0.2 | 0.4 | 90 | 90 |
| B3 | 0.52 | 0.4 | 0.2 | - | 0.1 | 95 | 85 |

Table 1 shows that the batteries A1 to A3, in which the lithium silicate phase is present in amorphous form in the LSX particles and does not have peaks derived from Li₂Si₂O₅ and Li₂SiO₃, exhibited high initial discharge capacities and cycle retention rates compared with the batteries B1 to B3, which has crystalline lithium silicate phase.

### [Industrial Applicability]

The present disclosure can provide a nonaqueous electrolyte secondary battery having a high capacity and good charge/discharge cycle characteristics. The nonaqueous electrolyte secondary battery according to the present disclosure is useful for a main power source of a mobile communication device, a portable electronic device, or the like.

### [Reference Signs List]

- 1: Electrode Group
- 2: Positive Electrode Lead
- 3: Negative Electrode Lead
- 4: Battery Case
- 5: Sealing Plate
- 6: Negative Electrode Terminal
- 7: Gasket
- 8: Sealing Plug
- 20: LSX particles
- 21: Lithium Silicate Phase
- 22: Silicon Particles
- 23: Mother particles
- 24: Primary Particles
- 26: Conductive Layer
- 28: Silicon oxide phase

## Claims

1. A negative electrode active material for a secondary battery, the negative electrode active material comprising a silicate composite particle, the silicate composite particle comprising crystalline silicon particles, an amorphous phase comprising an Li element, an O element, and an Si element, and a silicon oxide phase, wherein the silicon oxide phase and the silicon particles are dispersed in the amorphous phase.

2. The negative electrode active material for a secondary battery of Claim 1, wherein in a diffraction pattern by X-ray diffraction (XRD), a half-width W₁ of a diffraction peak near 2θ=28° derived from an Si(111) plane of the silicon particles is 0.3 or more and 1. 5 or less.

3. The negative electrode active material for a secondary battery of Claim 1 or 2, wherein in a diffraction pattern by X-ray diffraction (XRD), a half-width W₂ of a diffraction peak near 2θ=26° derived from an SiO₂ (011) plane of the silicon oxide phase is 0.2 or more and 0. 6 or less.

4. The negative electrode active material for a secondary battery of any one of Claims 1 to 3, wherein in a diffraction pattern by X-ray diffraction (XRD),
A being a total of an integrated intensity I₁ of the peak derived from the Si (111) plane of the silicon particles appearing in the range of 2θ=27° to 30°, and an integrated intensity I₂ of the peak derived from the SiO₂ (011) plane of the silicon oxide phase appearing in the range of 2θ=25° to 27;
B being the integrated intensity excluding the peak derived from the Si (111) plane of silicon particles and the peak derived from the SiO₂ (011) plane of the silicon oxide phase; and
a ratio B/A with an integration range of 23° to 30° is 0.03 or less.

5. The negative electrode active material for a secondary battery of any one of Claims 1 to 4, wherein in a diffraction pattern by X-ray diffraction (XRD), no peak derived from lithium silicate is present.

6. The negative electrode active material for a secondary battery of any one of Claims 1 to 5, wherein the amorphous phase further contains at least one selected from the group consisting of alkali-metal elements excluding Li and Group II elements.

7. The negative electrode active material for a secondary battery of any one of Claims 1 to 6, wherein the amorphous phase further contains an element M, and
the element M is at least one selected from the group consisting of B, Al, Zr, Nb, Ta, La, V, Y, Ti, P, Bi, Zn, Sn, Pb, Sb, Co, Er, F, and W.

8. A secondary battery comprising a positive electrode, a negative electrode, an electrolyte, and a separator interposed between the positive electrode and the negative electrode, wherein
the negative electrode includes a current collector and a negative electrode active material layer, and
the negative electrode active material layer includes the negative electrode active material for a secondary battery of any one of Claims 1 to 7.
